# EUROPÄISCHE PATENTSCHRIFT

(11) **EP 1 900 342 B1**
(45) Veröffentlichungstag und Bekanntmachung des Hinweises auf die Patenterteilung: **28.04.2010**
(21) Anmeldenummer: 07023754.0
(22) Anmeldetag: 18.10.2000
(51) Int. Cl.: A61C 17/34

(54) **Zahnbürste**
Toothbrush
Brosse à dents

(30) Priorität: 19.10.1999 DE 19950204; 03.11.1999 DE 29919053 U
(43) Veröffentlichungstag der Anmeldung: 19.03.2008
(62) Teilanmeldung aus: 05013879.1
(73) Patentinhaber: Trisa Holding AG, 6234 Triengen (CH)
(72) Erfinder: Häflinger, Peter, 6234 Triengen (CH); Fischer, Franz, 6234 Triengen (CH); Elster, Günther, 89312 Günzburg (DE)
(74) Vertreter: Schaad, Balass, Menzl & Partner AG

(56) Entgegenhaltungen:
- EP-A- 0 850 602
- GB-A- 2 250 428
- US-A- 5 590 434

## Beschreibung

Die Erfindung betrifft eine Zahnbürste gemäss dem Oberbegriff des Anspruches 1.

Bei der aus der EP-A-0 850 602 bekannten Zahnbürste dieser Art ist das als Unwucht ausgebildete Vibrationselement nahe am Kopfteil und der Antriebsmotor im Handgriff untergebracht. Das Vibrationselement sitzt auf einer sich in Längsrichtung des Halsteils erstreckenden Unwuchtwelle. Diese Unwuchtwelle ist beidseitig des Vibrationselements in Lagern gelagert und über eine im Halsteil verlaufende Zwischenwelle mit der Abtriebswelle des Antriebsmotors verbunden. Die Verbindung zwischen der Zwischenwelle und der Unwuchtwelle einerseits und der Zwischenwelle und der Abtriebswelle des Antriebsmotors andererseits erfolgt mittels flexibler Rohr- oder Schlauchstücken.

Aus der GB-A-2 250 428 ist eine Zahnbürste mit einem Borsten tragenden Kopfteil, einem Halsteil und einem Handgriff bekannt. Im Kopfteil ist eine Vibrationsvorrichtung untergebracht, die einen Antriebsmotor umfasst, der mit einer Batterie im Handgriff verbindbar ist. Der Antriebsmotor weist eine Welle auf, auf der ein als Exzenter ausgebildetes Vibrationselement sitzt und die eine Drehachse für das Vibrationselement festlegt, die parallel zur Längsachse der Borsten, also etwa rechtwinklig zur Längsachse der Zahnbürste, verläuft. Der Antriebsmotor samt Vibrationselement ist unmittelbar unterhalb der Borsten angeordnet, damit eine maximale Vibrationsübertragung an die Borsten gewährleistet ist.

Der vorliegenden Erfindung liegt nun die Aufgabe zugrunde, eine Zahnbürste der eingangs genannten Art zu schaffen, die eine gute Reinigungswirkung entfaltet, benutzerfreundlich ist und kostengünstig hergestellt werden kann.

Diese Aufgabe wird erfindungsgemäss durch eine Zahnbürste mit den Merkmalen des Anspruches 1 gelöst.

Dadurch, dass der Antriebsmotor angrenzend an das Vibrationselement im Halsteil angeordnet ist und das Vibrationselement auf der Welle des Antriebsmotors sitzt, verlaufen im Halsteil keine mechanischen Verbindungsteile, sondern nur elektrische Verbindungen, die vom Antriebsmotor zur Energiequelle führen. Die zwischen dem Vibrationselement und dem Handgriff angeordneten, eine elastisch nachgiebige Materialkomponente aufweisenden Halsteilzonen können entweder schwingungsdämpfend wirken, um die Übertragung von Schwingungen vom Vibrationselement auf den Handgriff zu dämpfen, und/oder einen elastisch auslenkbaren Bereich bilden. Diese Halsteilzonen können aber auch eine ästhetische Wirkung entfalten.

Bevorzugte Weiterausgestaltungen der erfindungsgemässen Zahnbürste bilden Gegenstand der abhängigen Ansprüche.

Die Erfindung wird nun anhand der Zeichnung näher erläutert.

Es zeigen rein schematisch:
- Fig. 1: in Seitenansicht und teilweise im Schnitt ein erstes Ausführungsbeispiel einer Zahnbürste und einen Handgriff-Verschlussteil voneinander getrennt (ohne Batterie);
- Fig. 2: in Unteransicht und teilweise im Schnitt ein zweites Ausführungsbeispiel einer Zahnbürste im zusammengesetzten Zustand;
- Fig. 3: in Seitenansicht und teilweise im Schnitt die Zahnbürste nach Fig. 2 und den Verschlussteil voneinander getrennt (ohne Batterie);
- Fig. 4: in Seitenansicht ein drittes Ausführungsbeispiel einer Zahnbürste im zusammengesetzten Zustand; und
- Fig. 5: einen vorderen Teil der Zahnbürste nach Fig. 4 mit verschiedenen Ausführungsformen auswechselbarer Behandlungsköpfe.

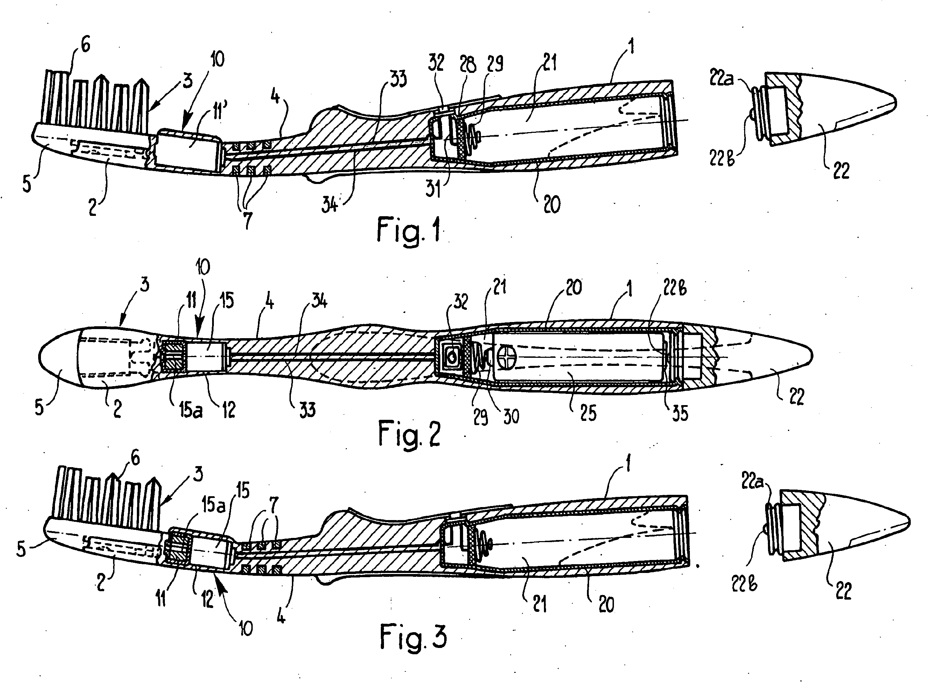

Sowohl die in Fig. 1 dargestellte Zahnbürste als auch diejenige nach Fig. 2 und 3 weist jeweils einen Handgriff 1, einen vorderen, borstentragenden Kopfteil 3 sowie einen den Kopfteil 3 mit dem Handgriff 1 verbindenden Halsteil 4 auf. Die zu Borstenbüscheln 6 zusammengefassten Borsten sind in einem Borstenträger 5 verankert und bilden mit ihren freistehenden Enden eine gegebenenfalls profilierte Bürstfläche. Bei der dargestellten Ausführungsform ist der Borstenträger 5 mit den Borstenbüscheln 6 in einer an sich bekannten und daher nicht näher beschriebenen Weise auswechselbar auf einen Halteteil 2 des Kopfteiles 3 aufgesetzt.

Der Halsteil 4 ist mit Halsteilzonen 7 aus einer elastisch nachgiebigeren Materialkomponente versehen, die die Elastizität des Halsteiles 4 bewirken oder zusätzlich steigern, so dass der borstentragende Kopfteil 3 beim Gebrauch der Zahnbürste bei einer Einwirkung von Kräften in Richtung gegen die Bürstfläche federelastisch zurückdrängbar ist. Gegebenenfalls sind die Halsteilzonen 7 als sich über einen Teil des Halsumfanges erstreckende, mit einem elastisch nachgiebigen Material (z.B. mit thermoplastischem Elastomer) gefüllte Einkerbungen ausgebildet. Eine andere Form und Anzahl von Halsteilzonen wäre selbstverständlich durchaus denkbar. Eine flexible Halszone ist auch ohne Verwendung von elastischen Materialkomponenten denkbar, z.B. durch Einschnürungen oder durch einen Balg.

Im vorderen Kopfteil 3 bzw. im an den Kopfteil 3 angrenzenden Bereich des Halsteiles 4 ist eine mechanische Vibrationsvorrichtung 10 integriert, mittels welcher dem borstentragenden Kopfteil 3 die Zahnreinigung bewirkende oder verstärkende Vibrationen erteilt werden können. Die Vibrationsvorrichtung 10 ist über im Halsteil 4 verlaufende elektrische Verbindungen an eine im Handgriff 1 untergebrachte elektrische Energiequelle anschliessbar, wie anschliessend beschrieben wird. Die bereits erwähnten Halsteilzonen 7 aus einem elastisch nachgiebigen Material wirken dabei als die Schwingung zwischen dem vibrierenden Kopfteil 3 und dem Handgriff 1 dämpfende Mittel, so dass sich die Vibrationswirkung vor allem im Kopfteil entfaltet und nur geringfügig auf den Handgriff 1 übertragen wird. Dies bedeutet, dass während des Zahnreinigungsvorganges nur geringfügige Schwingungen im Handgriff 1 zu verspüren sind, und dadurch die Handhabung der Zahnbürste angenehm ist. Aber auch umgekehrt ist es von Vorteil, dass die erzeugte Vibration durch den Handgriff 1 nicht gedämpft wird und sich im Kopfteil 3 voll auswirken kann. Anstelle der aus elastisch nachgiebigem Material bestehenden Halsteilzonen 7 wären allerdings auch andere schwingungsdämpfende Mittel denkbar; es muss nicht unbedingt ein elastisches Material eingesetzt werden. Die Dämpfung kann auch unter Verwendung eines Grundmaterials durch besondere Formgestaltung des Halsteiles erreicht werden, beispielsweise durch Vorhandensein eines Balg/Ziehharmonika - Teiles etc.

Im Handgriff 1 ist eine sich in seiner Längsrichtung erstreckende Kapsel bzw. Hülse 20 aus elektrisch leitendem Material untergebracht. Sowohl der Handgriff 1 als auch die Hülse 20 sind nach hinten offen, so dass ein durch einen Verschlussteil 22 von hinten verschliessbarer Hohlraum 21 gebildet ist, in den eine Batterie 25, beim dargestellten Ausführungsbeispiel eine handelsübliche, nicht wiederaufladbare Stiftbatterie mit einer definierten Leistung (z.B. 1,5 V) als Energiequelle für die Vibrationsvorrichtung 10 einsetzbar ist. Als Energiequelle könnte allerdings auch eine Knopfbatterie oder eine wiederaufladbare Akku-Zelle Verwendung finden.

In der Hülse 20 ist an einer Querwand 28 ein Federkontakt 29 für den Plus-Pol 30 der Batterie 25 (vgl. Fig. 2) angebracht, der über eine elektrische Leitung 31, einen in der Hülse 20 eingebauten und von der Aussenseite des Handgriffes 1 betätigbaren Schalter 32 und eine im Halsteil 4 verlaufende elektrische Leitung 33 an die Vibrationsvorrichtung 10 angeschlossen ist. Mittels des Schalters 32 kann die elektrische Verbindung unterbrochen werden.

Der Verschlussteil 22 ist mit einem Gewindezapfen 22a aus einem elektrisch leitenden Material ausgestattet und mit diesem in den Handgriff 1 bzw. in die Hülse 20 einschraubbar. Der Gewindezapfen 22a ist mit einer Kontaktfläche 22b versehen, die beim eingeschraubten Verschlussteil 22 am Minus-Pol 35 der in die Hülse 20 eingesetzten Batterie 25 zur Anlage kommt. Die elektrische Verbindung des Minus-Pols 35 mit der Vibrationsvorrichtung 10 erfolgt über den Gewindezapfen 22a, die Hülse 20 selber und eine die Hülse 20 an die Vibrationsvorrichtung 10 anschliessende, im Halsteil 4 verlaufende Leitung 34.

Anstatt über die elektrisch leitende Hülse 20 könnte die Stromübertragung auch anders erfolgen, beispielsweise unter Verwendung von Drähten oder eines elektrisch leitenden Kunststoffes.

Bei dem in Fig. 1 dargestellten Ausführungsbeispiel umfasst die Vibrationsvorrichtung 10 ein vorzugsweise in der Art eines Schwingungsankers funktionierendes Vibrationselement 11', das über die Leitungen 33, 34 direkt mit der Energiequelle elektrisch verbindbar ist und bei angeschlossener Energiequelle in Vibrationen versetzt wird.

Bei der in Fig. 2 und 3 dargestellten Zahnbürsten-Variante besteht die Vibrationsvorrichtung 10 aus einem Vibrationselement 11 in Form eines mechanische Vibrationen erzeugenden, um eine in Längsrichtung der Zahnbürste liegende Achse drehbaren Exzenters und aus einem unmittelbar angrenzend angeordneten, als Mikromotor 15 ausgebildeten Antrieb. Das Vibrationselement 11 ist mit der Welle 15a des über die Leitungen 33, 34 mit der Energiequelle elektrisch verbindbaren Mikromotors 15 verbunden. Der Mikromotor 15 und der Exzenter können als eine Baueinheit in einem Gehäuse 12 untergebracht werden.

Statt eines drehbeweglich antreibbaren Exzenters könnte auch ein translatorisch antreibbares Vibrationselement 11 in Frage kommen.

Es wäre möglich, bei der beschriebenen Zahnbürste den borstentragenden Kopfteil 3 beweglich gegenüber dem Halsteil 4 anzuordnen, um diesen bei mittels der Vibrationsvorrichtung 10 erzeugten Vibrationen in eine Bewegung gegenüber dem restlichen Teil der Zahnbürste zu versetzen.

Die elektrischen Leitungen 31, 33, 34 könnten auch mit Elektrizität leitenden Kunststoffbahnen realisiert werden.

Beim die Leitungen 31, 33 verbindenden oder unterbrechenden Schalter 32 kann es sich beispielsweise auch um einen Magnetschalter handeln.

Die bevorzugte Ausgestaltung des Schalters 32 beinhaltet jedoch einen auf einem Print angeordneten Impulsschalter und weitere elektronische Komponenten, welche den Schaltzustand speichern.

Die elektrische Verbindung zwischen der Batterie 25 und dem Vibrationselement 11' (Fig. 1) oder dem Antrieb 15 (Fig. 2 und 3) kann aber auch statt durch den Schalter 32 durch Drehen des in den Handgriff 1 bzw. in die Hülse 20 einschraubbaren oder mit diesen bajonettartig verbindbaren Verschlussteiles 22 bewerkstelligt oder unterbrochen werden (d.h. bei einer solchen Ausführung entfällt der Schalter 32).

Statt der Schraubverbindung des hinteren Verschlussteils 22 mit dem Handgriff 1 wäre selbstverständlich auch eine andere lösbare Verbindung (z.B. Steckverbindung, Bajonettverbindung etc.) und eine entsprechende Ausgestaltung des mit dem Minus-Pol 35 zusammenwirkenden Kontaktteils möglich.

Der Verschlussteil 22 könnte auch eine durchaus andere Form aufweisen, als in der Zeichnung dargestellt. Beispielsweise könnte der Verschlussteil mit einer Abstellfläche bzw. einem Fussteil ausgestattet sein und somit als ein Element zum Aufstellen der Zahnbürste dienen.

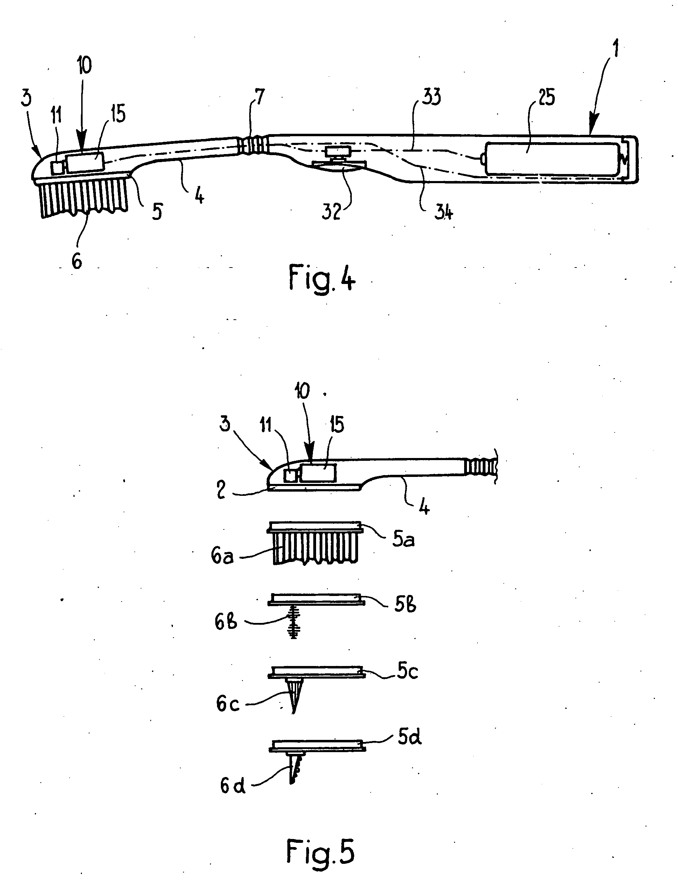

Die in Fig. 4 dargestellte Zahnbürste entspricht im wesentlichen derjenigen nach Fig. 2 und 3; die gleichen Teile sind wiederum mit den gleichen Bezugsziffern bezeichnet. Gemäss Fig. 4 ist die Vibrationsvorrichtung 10 direkt im vorderen Kopfteil 3 angeordnet. Bei diesem Ausführungsbeispiel entfällt die Hülse 20; die Batterie 25 ist direkt über die Leitungen 33, 34 mit der Vibrationsvorrichtung 10 verbunden. Auch bei dieser Zahnbürste wird vorzugsweise ein auf einen Halteteil 2 des Kopfteiles 3 z.B. in der Art einer Schnappverbindung aufsetzbarer, auswechselbarer Borstenträger 5 verwendet. Die Auswechselbarkeit des mit den Borstenbüscheln 6 versehenen Borstenträgers 5 ist von besonderem Vorteil, da die mit der Vibrationsvorrichtung 10 ausgestattete Zahnbürste unabhängig von der Lebensdauer der Borsten, die in der Regel sogar kleiner ist als die Lebensdauer der Batterie 25, verwendet werden kann.

Wie aus Fig. 5 ersichtlich können dabei statt des Borstenträgers 5 bzw. 5a, der einen Teil eines konventionellen Bürstenkopfes bildet und mit Borstenbüscheln 6 bzw. 6a versehen ist, wahlweise verschiedene andere Borstenträger bzw. Adapter 5b bis 5d auf den Halteteil 2 aufgesetzt werden, die mit verschiedenen Interdentalbürsten 6b, 6c bzw. Interdental-Behandlungsteilen 6d zur wirksamen Reinigung der Zahnzwischenräume versehen sind. Die Interdentalbürste 6b kann beispielsweise als eine Spiralbürste aus beschichtetem Draht mit eingedrehten Kunststofffilamenten ausgebildet sein. Die Interdentalbürste 6c besteht aus Borsten, die zusammen eine Bündelspitze bilden. Der Behandlungsteil 6d kann z.B. als ein eine Spitze aufweisendes Kunststoffelement ausgebildet sein, der vorzugsweise mit einer abrasiven Beschichtung zur Entfernung von Plaque und Zahnstein in den Zahnzwischenräumen versehen sein kann. Selbstverständlich könnten auch andere beliebige Behandlungsköpfe verwendet werden.

Auch bei der Variante nach Fig. 4 und 5 könnte der Borstenträger 5 derart ausgestaltet werden, dass eine vibrationsbedingte Bewegung gegenüber dem Halteteil 2 möglich wäre.

Zur Einbringung der Vibrationsvorrichtung 10, der Verbindungsleitungen 33, 34 und weiterer elektronischen Komponenten kann die Zahnbürste bzw. ihr Gehäuse zweiteilig hergestellt und die beiden Teile nach dem Hineinlegen der vorstehend erwähnten Teile wasserdicht verschweisst werden.

Die beschriebene Zahnbürste kann aber auch vorzugsweise in einem Zwei- oder Mehrkomponenten-Spritzgiessverfahren hergestellt werden. Mit Vorteil werden dabei die vorstehend erwähnten Teile als eine Einheit in einen aus einer ersten Materialkomponente gespritzten Formteil eingelegt und danach mit der zweiten Materialkomponente (oder mit den weiteren Materialkomponenten) umspritzt. Es muss sich dabei nicht um vollständiges Umspritzen handeln. Gewisse Teile können frei liegen, wodurch eine ästhetische Wirkung erzielt werden kann.

Allerdings könnten die oben erwähnten elektronischen Komponenten auch in einen fertig gespritzten Handgriff 1 eingesetzt werden.

Dadurch, dass nicht nur das Vibrationselement 11, 11' selber sondern auch der Antrieb, d.h. der Mikromotor 15, im vorderen Kopfteil 3 oder im unmittelbar angrenzenden vorderen Bereich des Halsteiles 4 angeordnet sind, müssen keine mechanische Antriebsmittel zur Verbindung des Mikromotors mit dem Vibrationselement 11 durch den flexiblen Halsteil 4 geführt werden. Durch den Halsteil 4 verlaufen lediglich die elektrischen Leitungen 33, 34 (Drähte, Kabel oder elektrisch leitende Kunststoffbahnen).

Vorzugsweise wird eine mechanische Vibrationsvorrichtung 10 verwendet, die einen Durchmesser von weniger als 15 mm, vorzugsweise weniger als 6 mm aufweist, und weniger als 35 mm, vorzugsweise weniger als 20 mm lang ist. Dadurch wird gewährleistet, dass die Zahnbürste ergonomisch ausgestaltet werden kann und gut handhabbar ist. Die Zahnbürste entspricht in ihrer Grösse ungefähr den herkömmlichen Handzahnbürsten, was eine einfachere Handhabung im Vergleich zu den auf dem Markt erhältlichen, wesentlich grösseren Elektrozahnbürsten bedeutet, und dennoch wird mit dieser Zahnbürste eine mit den bekannten Elektrozahnbürsten vergleichbare, diesen gegenüber jedoch schonendere Reinigungswirkung erreicht. Ausserdem ist diese Zahnbürste in der Herstellung einfach und kostengünstig.

Die Vibrationsvorrichtung könnte allerdings auch in herkömmlichen Elektrozahnbürsten integriert werden.

## Patentansprüche

1. Zahnbürste mit einem Handgriff (1), einem Borsten tragenden vorderen Kopfteil (3), einem den Kopfteil (3) mit dem Handgriff (1) verbindenden Halsteil (4), einer im Handgriff (1) untergebrachten elektrischen Energiequelle (25), und einer den Kopfteil (3) in Schwingung versetzenden mechanischen Vibrationsvorrichtung (10), die zwischen dem Kopfteil (3) und dem Handgriff (1) angeordnet ist und die ein, von einem mit der elektrischen Energiequelle (25) verbindbaren Antriebsmotor (15) angetriebenes, als Exzenter ausgebildetes Vibrationselement (11) aufweist, das um eine sich in Längsrichtung der Zahnbürste erstreckende Drehachse drehbar ist, **dadurch gekennzeichnet, dass** der Antriebsmotor (15) unmittelbar angrenzend an das Vibrationselement (11) im Halsteil (4) angeordnet ist und eine Welle (15a) aufweist, auf der das Vibrationselement (11) sitzt und die die Drehachse des Vibrationselementes (11) festlegt und dass zwischen dem Vibrationselement (11) und dem Handgriff (1) Halsteilzonen (7), die eine elastisch nachgiebige Materialkomponente aufweisen, vorhanden sind.

2. Zahnbürste nach Anspruch 1, **dadurch gekennzeichnet, dass** zur Verhinderung einer Vibrationsübertragung vom Vibrationselement (11) auf den Handgriff (1) die Halsteilzonen (7) schwingungsdämpfend sind.

3. Zahnbürste nach Anspruch 1 oder 2, **dadurch gekennzeichnet, dass** die Halsteilzonen (7) einen elastisch auslenkbaren Bereich bilden.

4. Zahnbürste nach einem der Ansprüche 1 bis 3, **dadurch gekennzeichnet, dass** die Halsteilzonen (7) Einkerbungen aufweisen, die mit der elastisch nachgiebigen Materialkomponente gefüllt sind, wobei sich die Einkerbungen vorzugsweise in Richtung des Halsumfanges erstrecken.

5. Zahnbürste nach Anspruch 1, **dadurch gekennzeichnet, dass** der Halsteil (4) eine flexible Halszone aufweist, die ohne Verwendung von elastisch nachgiebigen Materialkomponenten durch Einschnürungen oder durch einen Balg gebildet ist.

6. Zahnbürste nach einem der Ansprüche 1 bis 5, **dadurch gekennzeichnet, dass** der Handgriff (1) mit einem von dessen Aussenseite her betätigbaren, mit dem einen Pol (30) der elektrischen Energiequelle (25) in Verbindung stehenden Schalter (32) versehen ist, der über eine flexible elektrische Leitung (33) mit dem Antriebsmotor (15) verbunden ist, der über eine elektrische Verbindung, die eine vom Antriebsmotor (15) wegführende flexible elektrische Leitung (34) aufweist, mit dem andern Pol (35) der elektrischen Energiequelle (25) verbunden ist.

7. Zahnbürste nach einem der Ansprüche 1 bis 6, **dadurch gekennzeichnet, dass** als Energiequelle eine auswechselbare Batterie (25) dient.

8. Zahnbürste nach Anspruch 7, **dadurch gekennzeichnet, dass** die Batterie (25) in eine Halterung (20) aus elektrisch leitendem Material eingesetzt ist, die in einem nach hinten offenen und durch einen Verschlussteil (22) von hinten verschlossenen Handgriff-Hohlraum (21) angeordnet ist.

9. Zahnbürste nach den Ansprüchen 6 und 8, **dadurch gekennzeichnet, dass** die elektrische Verbindung eines Batterie-Pols (30) mit dem Schalter (32) über einen Federkontakt (29) und über eine vom Federkontakt (29) zum Schalter (32) führende Leitung (31) und die elektrische Verbindung des anderen Batterie-Pols (35) mit dem Antriebsmotor (15) über einen Teil (22a) des Verschlussteiles (22), die Halterung (20) und die an den Antriebsmotor (15) angeschlossene flexible elektrische Leitung (34) erfolgt.

10. Zahnbürste nach einem der Ansprüche 1 bis 9, **dadurch gekennzeichnet, dass** der Kopfteil (3) einen Halteteil (2) aufweist, auf welchen ein mit Borsten versehener Borstenträger (5) auswechselbar aufgesetzt ist.

11. Zahnbürste nach einem der Ansprüche 1 bis 10, **dadurch gekennzeichnet, dass** der Kopfteil (3) gegenüber dem Halsteil (4) beweglich angeordnet und durch die mittels der Vibrationsvorrichtung (10) erzeugten Vibrationen in eine Relativbewegung gegenüber dem Halsteil (4) versetzbar ist.

12. Zahnbürste nach einem der Ansprüche 1 bis 11, **dadurch gekennzeichnet, dass** das Gehäuse der Zahnbürste zwei Gehäuseteile aufweist, die miteinander wasserdicht verbunden, vorzugsweise verschweisst, sind.

13. Zahnbürste nach einem der Ansprüche 1 bis 12, **dadurch gekennzeichnet, dass** das Vibrationselement (11) und der Antriebsmotor (15) in einem Gehäuse (12) untergebracht sind.

14. Zahnbürste nach einem der Ansprüche 1 bis 13, **dadurch gekennzeichnet, dass** die Vibrationsvorrichtung (10) einen Durchmesser von weniger als 15 mm, vorzugsweise weniger als 6 mm, und eine Länge von weniger als 35 mm, vorzugsweise weniger als 20 mm, aufweist.

## Claims

1. Toothbrush having a handle (1), having a front bristle-carrying head part (3), having a neck part (4), which connects the head part (3) to the handle (1), having an electrical power source (25), which is accommodated in the handle (1), and having a mechanical vibratory device (10) which causes the head part (3) to vibrate, is arranged between the head part (3) and the handle (1) and has a vibratory element (11) which is driven by a drive motor (15), it being possible for the latter to be connected to the electrical power source (25), is designed as an eccentric and can be rotated about an axis of rotation which extends in the longitudinal direction of the toothbrush, **characterized in that** the drive motor (15) is arranged in the neck part (4), directly adjacent to the vibratory element (11), and has a shaft (15a), on which is seated the vibratory element (11), and which defines the axis of rotation of the vibratory element (11), and **in that** neck-part zones (7), which have an elastically compliant material component, are present between the vibratory element (11) and the handle (1).

2. Toothbrush according to Claim 1, **characterized in that** the neck-part zones (7) are designed to damp vibrations, in order to prevent vibration transmission from the vibratory element (11) to the handle (1).

3. Toothbrush according to Claim 1 or 2,
**characterized in that** the neck-part zones (7) form an elastically deflectable region.

4. Toothbrush according to one of Claims 1 to 3, **characterized in that** the neck-part zones (7) have notches which are filled with the elastically compliant material component, the notches preferably extending in the direction of the neck circumference.

5. Toothbrush according to Claim 1, **characterized in that** the neck part (4) has a flexible neck zone which, without using elastically compliant material components, is formed by constrictions or by a bellows.

6. Toothbrush according to one of Claims 1 to 5, **characterized in that** the handle (1) is provided with a switch (32) which can be actuated from the outside of the handle, is connected to the one pole (30) of the electrical power source (25) and is connected, via a flexible electric line (33), to the drive motor (15), which is connected to the other pole (35) of the electrical power source (25) via an electrical connection which has a flexible electric line (34) leading away from the drive motor (15).

7. Toothbrush according to one of Claims 1 to 6, **characterized in that** the power source used is an exchangeable battery (25).

8. Toothbrush according to Claim 7, **characterized in that** the battery (25) is inserted into a holder (20) which is made of electrically conductive material and is arranged in a handle cavity (21) which is open to the rear and is closed from the rear by a closure part (22).

9. Toothbrush according to Claims 6 and 8,
**characterized in that** one battery pole (30) is electrically connected to the switch (32) via a spring contact (29) and via a line (31) leading from the spring contact (29) to the switch (32) and the other battery pole (35) is electrically connected to the drive motor (15) via a part (22a) of the closure part (22), the holder (20) and the flexible electric line (34), which is connected to the drive motor (15).

10. Toothbrush according to one of Claims 1 to 9, **characterized in that** the head part (3) has a retaining part (2) on which a bristle carrier (5) provided with bristles is positioned in an exchangeable manner.

11. Toothbrush according to one of Claims 1 to 10, **characterized in that** the head part (3) is arranged such that it can be moved in relation to the neck part (4), and it can be made to move relative to the neck part (4) by the vibrations produced by means of the vibratory device (10).

12. Toothbrush according to one of Claims 1 to 11, **characterized in that** the housing of the toothbrush has two housing parts which are connected, preferably welded, to one another in a water-tight manner.

13. Toothbrush according to one of Claims 1 to 12, **characterized in that** the vibratory element (11) and the drive motor (15) are accommodated in a housing (12).

14. Toothbrush according to one of Claims 1 to 13, **characterized in that** the vibratory device (10) has a diameter of less than 15 mm, preferably less than 6 mm, and a length of less than 35 mm, preferably less than 20 mm.

## Revendications

1. Brosse à dents comprenant un manche (1), une partie de tête avant (3) portant des poils, une partie de col (4) reliant la partie de tête (3) au manche (1), une source d'énergie électrique (25) montée dans le manche (1), et un dispositif de vibration mécanique (10) faisant vibrer la partie de tête (3), qui est disposé entre la partie de tête (3) et le manche (1) et qui présente un élément de vibration (11) réalisé sous forme d'excentrique, entraîné par un moteur d'entraînement (15) pouvant être connecté à la source d'énergie électrique (25), qui peut tourner autour d'un axe de rotation s'étendant dans la direction longitudinale de la brosse à dents, **caractérisée en ce que** le moteur d'entraînement (15) est disposé dans la partie de col (4) directement à côté de l'élément de vibration (11) et présente un arbre (15a), sur lequel repose l'élément de vibration (11) et qui fixe l'axe de rotation de l'élément de vibration (11) et **en ce que** des zones de partie de col (7) qui présentent un composant de matériau flexible élastiquement, sont prévues entre l'élément de vibration (11) et le manche (1).

2. Brosse à dents selon la revendication 1,
**caractérisée en ce que** pour empêcher une transmission des vibrations de l'élément de vibration (11) au manche (1), les zones de partie de col (7) sont réalisées de manière à amortir les vibrations.

3. Brosse à dents selon la revendication 1 ou 2, **caractérisée en ce que** les zones de partie de col (7) forment une région pouvant être déviée élastiquement.

4. Brosse à dents selon l'une quelconque des revendications 1 à 3, **caractérisée en ce que** les zones de partie de col (7) présentent des encoches qui sont remplies du composant de matériau flexible élastiquement, les encoches s'étendant de préférence dans la direction de la périphérie du col.

5. Brosse à dents selon la revendication 1,
**caractérisée en ce que** la partie de col (4) présente une zone de col flexible qui est formée par des rétrécissements ou par un soufflet sans utiliser de composants de matériau flexible élastiquement.

6. Brosse à dents selon l'une quelconque des revendications 1 à 5, **caractérisée en ce que** le manche (1) est pourvu d'un commutateur (32) pouvant être actionné depuis son côté extérieur, en liaison avec l'un des pôles (30) de la source d'énergie électrique (25), qui est connecté par le biais d'une conduite électrique flexible (33), au moteur d'entraînement (15) qui est connecté à l'autre pôle (35) de la source d'énergie électrique (25) par le biais d'une connexion électrique, qui présente une conduite électrique flexible (34) partant du moteur d'entraînement (15).

7. Brosse à dents selon l'une quelconque des revendications 1 à 6, **caractérisé en ce que** l'on utilise comme source d'énergie une pile jetable (25).

8. Brosse à dents selon la revendication 7,
**caractérisée en ce que** la pile (25) est insérée dans une fixation (20) en matériau électriquement conducteur, qui est disposée dans une cavité du manche (21) ouverte vers l'arrière et fermée par l'arrière par une pièce de fermeture (22).

9. Brosse à dents selon les revendications 6 et 8, **caractérisée en ce que** la connexion électrique d'un pôle de la pile (30) au commutateur (32) s'effectue par le biais d'un contact à ressort (29) et par le biais d'une conduite (31) conduisant du contact à ressort (29) au commutateur (32) et la connexion électrique de l'autre pôle de la pile (35) au moteur d'entraînement (15) s'effectue par une partie (22a) de la partie de fermeture (22), la fixation (20) et la conduite électrique flexible (34) raccordée au moteur d'entraînement (15).

10. Brosse à dents selon l'une quelconque des revendications 1 à 9, **caractérisée en ce que** la partie de tête (3) présente une partie de retenue (2) sur laquelle est placé, de manière remplaçable, un support de poils (5) pourvu de poils.

11. Brosse à dents selon l'une quelconque des revendications 1 à 10, **caractérisée en ce que** la partie de tête (3) est disposée de manière mobile par rapport à la partie de col (4), et peut être amenée en mouvement relatif par rapport à la partie de col (4) par les vibrations produites par le dispositif de vibration (10).

12. Brosse à dents selon l'une quelconque des revendications 1 à 11, **caractérisée en ce que** le boîtier de la brosse à dents présente deux parties de boîtier qui sont connectées l'une à l'autre de manière étanche à l'eau, de préférence par soudage.

13. Brosse à dents selon l'une quelconque des revendications 1 à 12, **caractérisée en ce que** l'élément de vibration (11) et le moteur d'entraînement (15) sont montés dans un boîtier (12).

14. Brosse à dents selon l'une quelconque des revendications 1 à 13, **caractérisée en ce que** le dispositif de vibration (10) présente un diamètre inférieur à 15 mm, de préférence inférieur à 6 mm, et une longueur inférieure à 35 mm, de préférence inférieure à 20 mm.
